# FASCICULE DE BREVET EUROPEEN

(11) **EP 3 019 365 B1**
(45) Date de publication et mention de la délivrance du brevet: **02.08.2017**
(21) Numéro de dépôt: 14739878.8
(22) Date de dépôt: 17.06.2014
(51) Int. Cl.: B60K 5/12, B62D 21/11, B62D 21/15

(54) **VÉHICULE AUTOMOBILE COMPORTANT DEUX PARTIES RELIÉES ENTRE ELLES PAR UN ORGANE DE LIAISON À RUPTURE PROGRAMMÉE**
KRAFTFAHRZEUG MIT ZWEI TEILEN, DIE DURCH EIN VERBINDUNGSTEIL MIT PROGRAMMIERTEM BRUCH MITEINANDER VERBUNDEN SIND
MOTOR VEHICLE COMPRISING TWO PORTIONS CONNECTED TO ONE ANOTHER BY A PROGRAMMED-RUPTURE CONNECTING MEMBER

(30) Priorité: 11.07.2013 FR 1356810
(43) Date de publication de la demande: 18.05.2016
(73) Titulaire: Peugeot Citroën Automobiles SA, 78140 Vélizy Villacoublay (FR)
(72) Inventeur: PERU, Marc, F-92290 Chatenay-Malabry (FR)
(74) Mandataire: Rosenberg, Muriel Sylvie
(86) Numéro de dépôt international: PCT/FR2014/051491
(87) Numéro de publication internationale: WO 2015/004354

(56) Documents cités:
- WO-A1-2012/128328
- DE-A1-102006 003 837
- FR-A1- 2 927 278
- FR-A1- 2 983 271

## Description

La présente invention concerne un véhicule automobile comportant deux parties reliées entre elles par un organe de liaison à rupture programmée, notamment bien que non exclusivement l'invention concerne une rupture programmée d'une biellette anti-couple assurant une liaison entre le berceau et le groupe moto-propulseur d'un véhicule automobile.

### ARRIÈRE-PLAN DE L'INVENTION

On sait que pour assurer la sécurité des passagers d'un véhicule automobile lors d'un accident, il est nécessaire de prévoir des dispositions pour assurer une déformation contrôlée du véhicule et minimiser les effets du choc sur les passagers.

En particulier, pour les véhicules comprenant un groupe moto-propulseur s'étendant transversalement, celui-ci est sollicité en premier lors d'un choc frontal du véhicule et il est donc souhaitable de retarder la transmission au berceau du véhicule de l'onde de choc à laquelle le groupe moto-propulseur est soumis.

À cet effet il est connu du document FR 2 967 864, qui sert de base à la présentation en deux parties de la revendication 1, de provoquer la rupture programmée de la biellette anti-couple qui relie le groupe moto-propulseur au berceau du véhicule. Il est prévu dans ce document de réaliser une biellette anti-couple ayant une résistance définie à un effort de cisaillement sur la biellette de sorte que celle-ci se rompt lorsque l'effort de cisaillement auquel elle est soumise est supérieur à un seuil prédéterminé. Une rupture de la biellette anti-couple est ainsi obtenue lors d'un choc frontal. Toutefois, il a été constaté que dans certaines circonstances qui ne correspondent pas à un choc, par exemple lorsque le moteur cale alors qu'une vitesse est enclenchée, la biellette anti-couple est soumise à un effort de cisaillement équivalent à l'effort produit lors d'un choc de sorte qu'il existe un risque de rupture intempestive de la biellette anti-couple dans des circonstances qui ne correspondent pas un choc.

### OBJET DE L'INVENTION

Un but de l'invention et de proposer un agencement permettant d'obtenir une rupture certaine de la biellette anti-couple lors d'un choc tout en garantissant une intégrité de la biellette anti-couple lorsque le véhicule n'est pas soumis à un choc.

### BRÈVE DESCRIPTION DE L'INVENTION

En vue de la réalisation de ce but, on propose selon l'invention un véhicule automobile selon la revendication 1. Ainsi, la rupture de l'organe de liaison ne peut avoir lieu que lorsque l'organe de liaison est en contact avec l'organe de rupture, c'est-à-dire seulement lorsque l'organe de liaison est passé au-delà de la première position extrême en fonctionnement normal. On est donc assuré que la rupture de l'organe de liaison correspond à une situation de choc violent sur la première partie de véhicule.

Selon une version avantageuse de l'invention, l'organe de rupture a un bord d'attaque s'étendant parallèlement à l'axe de pivotement.

De préférence, la plaque d'acier est coudée.

De préférence encore, la plaque d'acier est affutée le long d'un bord tourné vers la biellette anti-couple.

### BRÈVE DESCRIPTION DES DESSINS

D'autres caractéristiques et avantages de l'invention apparaîtront encore à la lecture de la description qui suit de deux modes de réalisation préférés non limitatifs de l'invention en référence aux figures ci-jointes parmi lesquelles:
- La figure 1 est une vue en perspective partielle de dessous illustrant la liaison entre le groupe moto-propulseur et une partie du berceau par une biellette anti-couple,
- la figure 2 est une vue en perspective partielle agrandie de la biellette anti-couple et de la chape de fixation au groupe moto-propulseur équipée d'un organe de rupture de la biellette anti-couple selon un premier mode de réalisation de l'invention
- la figure 3 est une vue en perspective analogue à celle de la figure 2 d'un second mode de réalisation de l'invention.

### DESCRIPTION DETAILLÉE DE L'INVENTION

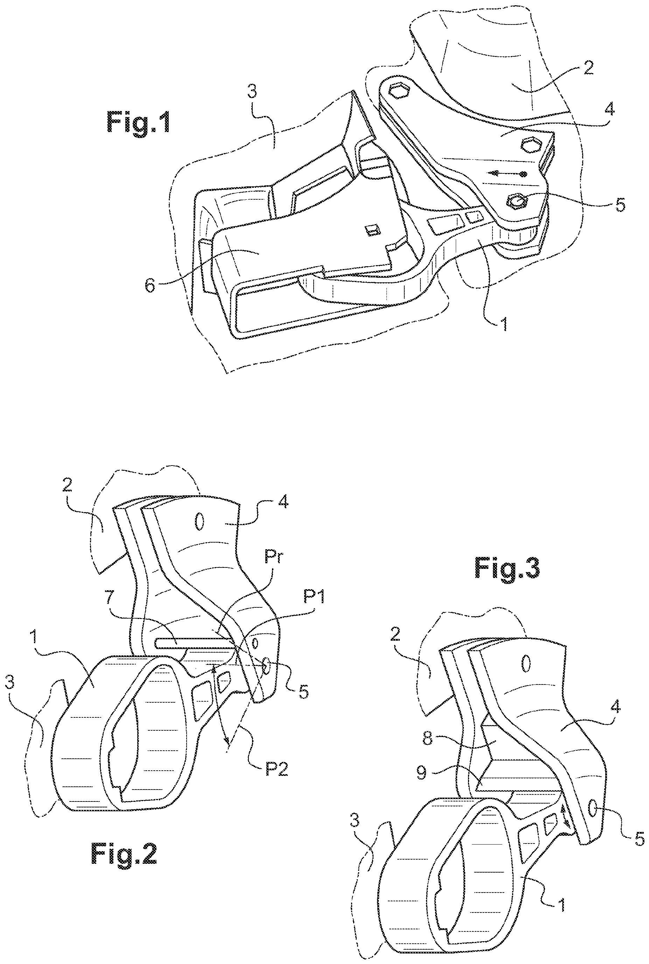

En référence à la figure 1, l'invention concerne la rupture d'un organe de liaison entre deux parties d'un véhicule automobile reliées par l'organe de liaison, et plus particulièrement la rupture de la biellette anti-couple 1 reliant le groupe moto-propulseur 2 à une partie du berceau 3. De façon connue en soi une extrémité de la biellette anti-couple est reliée au groupe moto-propulseur 2 par une chape 4 supportant un axe de pivotement 5, tandis que l'autre extrémité de la biellette anti-couple 1 est reliée à la partie de berceau 3 par une chape 6.

Comme illustré par la figure 2, la biellette anti-couple et le groupe moto-propulseur peuvent donc pivoter l'un par rapport à l'autre. En fonctionnement normal la biellette anti-couple 1 et le groupe moto-propulseur 2 pivotent entre une première position extrême P1 dans laquelle la biellette anti-couple et le groupe moto-propulseur sont proches l'un de l'autre, et une seconde position extrême P2 dans laquelle la biellette anti-couple et le groupe moto-propulseur sont distants l'un de l'autre.

Selon le premier mode de réalisation de l'invention une tige de rupture 7, par exemple une tige en acier ressort d'un diamètre de 7mm, s'étendant parallèlement à l'axe de pivotement 5 en regard d'un côté de la biellette anti-couple 1, est soudée à la chape de fixation 4 dans une position Pr au-delà de la première position extrême P1. En fonctionnement normal la biellette anti-couple 1 est soumise à des efforts ne risquant pas de provoquer sa rupture. Au contraire, en cas de choc frontal, le groupe moto-propulseur bascule autour de l'axe de pivotement 5 jusqu'à ce que la tige d'acier 7 vienne frapper la biellette anti-couple 1, de préférence dans la zone de plus faible section de la biellette. Le choc résultant du contact brutal de la tige d'acier 7 avec le côté de la biellette anti-couple 1 provoque une rupture immédiate de celle-ci, de sorte que la force d'appui du groupe moto-propulseur n'est plus transmise à la partie de berceau 3 tant que le groupe moto-propulseur n'est pas directement en contact avec la partie de berceau 3.

La figure 3 illustre le second mode de réalisation de l'invention. Dans ce mode de réalisation, l'organe de rupture est une plaque d'acier coudée 8, d'une épaisseur de 3mm, soudée à la chape de fixation 4 et ayant un bord inférieur 9 qui s'étend parallèlement à l'axe de pivotement 5 au-delà de la position extrême P1, telle que définie en relation avec la figure 2. Le bord inférieur 9 de la plaque 8 est de préférence affûté de sorte qu'il en résulte une concentration de la contrainte de cisaillement appliquée à la biellette anti-couple 1 lors d'un choc frontal du véhicule.

Bien entendu l'invention n'est pas limitée aux modes de réalisation décrits et on peut y apporter des variantes de réalisation sans sortir du cadre de l'invention telle que définie par les revendications.

En particulier, bien que l'invention ait été décrite en relation avec la liaison du groupe moto-propulseur à une partie du berceau par la biellette anti-couple, l'invention s'applique à toute liaison entre deux parties d'un véhicule automobile au moyen d'un organe de liaison monté pivotant et ayant en cas de choc une trajectoire allant au-delà de la trajectoire en fonctionnement normal.

## Revendications

1. Véhicule automobile comportant un groupe moto-propulseur (2) et une partie de berceau (3) reliés entre eux par une biellette anti-couple (1) ayant au moins une extrémité montée pour pivoter autour d'un axe de pivotement (5) porté par ledit groupe moto-propulseur (2) de façon que la biellette anti-couple (1) et le groupe moto-propulseur (2) puissent débattre l'un par rapport à l'autre lors d'un fonctionnement normal du véhicule, entre une première position extrême (P1) dans laquelle la biellette anti-couple (1) et le groupe moto-propulseur (2) sont proches l'un de l'autre, et une seconde position extrême (P2) dans laquelle la biellette anti-couple (1) et le groupe moto-propulseur (2) sont distants l'un de l'autre, **caractérisé en ce qu'**il comporte un organe de rupture (7; 8) monté de façon fixe sur le groupe moto-propulseur (2) et s'étendant en regard de la biellette anti-couple (1) au-delà de la première position extrême (P1), l'organe de rupture étant une tige d'acier à ressort (7) ou une plaque d'acier (8) encastrée dans une chape de fixation (4) de la biellette anti-couple (1) sur le groupe moto-propulseur (2), ledit organe de rupture (7 ; 8) ayant une structure provoquant une rupture de la biellette anti-couple (1) lors d'un choc entre la biellette anti-couple (1) et l'organe de rupture (7; 8).

2. Véhicule automobile selon la revendication 1, **caractérisé en ce que** l'organe de rupture (7; 8) a un bord d'attaque s'étendant parallèlement à l'axe de pivotement (5).

3. Véhicule automobile selon la revendication 1 ou 2, **caractérisé en ce que** la plaque d'acier (8) est coudée.

4. Véhicule automobile selon la revendication 1 ou 2, **caractérisé en ce que** la plaque d'acier est affûtée le long d'un bord (9) tourné vers la biellette anti-couple.

## Patentansprüche

1. Kraftfahrzeug, das ein Motorantriebsaggregat (2) und einen Aufhängungsteil (3) umfasst, die miteinander durch einen Drehmomentausgleichsschwingarm (1) verbunden sind, der mindestens ein Ende hat, das montiert ist, um um eine Schwenkachse (5) zu schwenken, die von dem Motorantriebsaggregat (2) derart getragen wird, dass der Drehmomentausgleichsschwingarm (1) und das Motorantriebsaggregat (2) zueinander bei einem ordnungsgemäßen Betrieb des Fahrzeugs zwischen einer ersten Endposition (P1), in der der Drehmomentausgleichsschwingarm (1) und das Motorantriebsaggregat (2) einander nahe sind, und einer zweiten Endposition (P2), in der der Drehmomentausgleichsschwingarm (1) und das Motorantriebsaggregat (2) voneinander beabstandet sind, ausschlagen können, **dadurch gekennzeichnet, dass** es ein Bruchelement (7; 8) umfasst, das stationär auf dem Motorantriebsaggregat (2) montiert ist und sich gegenüber dem Drehmomentausgleichsschwingarm (1) über die erste Endposition (P1) erstreckt, wobei das Bruchelement ein Stahlschaft mit Feder (7) oder eine Stahlplatte (8) ist, die in einer Befestigungsgabel (4) des Drehmomentausgleichsschwingarms (1) auf dem Motorantriebsaggregat (2) eingelassen ist, wobei das Bruchorgan (7; 8) eine Struktur hat, die einen Bruch des Drehmomentausgleichsschwingarms (1) bei einem Stoß zwischen dem Drehmomentausgleichsschwingarm (1) und dem Bruchelement (7; 8) verursacht.

2. Kraftfahrzeug nach Anspruch 1, **dadurch gekennzeichnet, dass** das Bruchelement (7; 8) eine Vorderkante hat, die sich parallel zu der Schwenkachse (5) erstreckt.

3. Kraftfahrzeug nach Anspruch 1 oder 2, **dadurch gekennzeichnet, dass** die Stahlplatte (8) abgewinkelt ist.

4. Kraftfahrzeug nach Anspruch 1 oder 2, **dadurch gekennzeichnet, dass** die Stahlplatte entlang eines Rands (9), der zu dem Drehmomentausgleichsschwingarm gerichtet ist, geschliffen ist.

## Claims

1. A motor vehicle comprising a power train (2) and a cradle part (3) connected to one another by an anti-torque rod (1) having at least one end mounted so as to pivot about a pivot axis (5) carried by said power train (2) such that the anti-torque rod (1) and the power train (2) can move with respect to one another during a normal operation of the vehicle, between a first end position (P1) in which the anti-torque rod (1) and the power train (2) are close to one another, and a second end position (P2) in which the anti-torque rod (1) and the power train (2) are remote from one another, **characterized in that** it comprises a rupture member (7; 8) mounted in a fixed manner on the power train (2) and extending opposite the anti-torque rod (1) beyond the first end position (P1), the rupture member being a steel spring rod (7) or a steel plate (8) fitted in a fixing yoke (4) of the anti-torque rod (1) on the power train (2), said rupture member (7; 8) having a structure causing a rupture of the anti-torque rod (1) in the case of an impact between the anti-torque rod (1) and the rupture member (7; 8).

2. The motor vehicle according to claim 1, **characterized in that** the rupture member (7; 8) has a leading edge extending parallel to the pivot axis (5).

3. The motor vehicle according to claim 1 or 2, **characterized in that** the steel plate (8) is bent.

4. The motor vehicle according to claim 1 or 2, **characterized in that** the steel plate is sharpened along an edge (9) turned towards the anti-torque rod.
